# EUROPEAN PATENT SPECIFICATION

(11) **EP 1 096 532 B1**
(45) Date of publication and mention of the grant of the patent: **28.12.2005**
(21) Application number: 00123265.1
(22) Date of filing: 26.10.2000
(51) Int. Cl.: H01J 1/312

(54) **Electron emission device**
Elektronenemissionsvorrichtung
Dispositif d'émission d'électrons

(30) Priority: 27.10.1999 JP 30507199
(43) Date of publication of application: 02.05.2001
(73) Proprietor: Pioneer Corporation, Meguro-ku, Tokyo (JP)
(72) Inventor: Yoshikawa, Takamasa, c/o Pioneer Corporation R & D, Tsurugashima-shi, Saitama, 350-2288 (JP); Chuman, Takashi, c/o Pioneer Corporation R & D, Tsurugashima-shi, Saitama, 350-2288 (JP); Negishi, Nobuyasu, c/o Pioneer Corporation R & D, Tsurugashima-shi, Saitama, 350-2288 (JP); Iwasaki, Shingo, c/o Pioneer Corporation R & D, Tsurugashima-shi, Saitama, 350-2288 (JP); Yamada, Takashi, c/o Pioneer Corporation R & D, Tsurugashima-shi, Saitama, 350-2288 (JP); Sakemura, Kazuto, c/o Pioneer Corporation R & D, Tsurugashima-shi, Saitama, 350-2288 (JP); Hata, Takuya, c/o Pioneer Corporation R & D, Tsurugashima-shi, Saitama, 350-2288 (JP); Yoshizawa, Atsushi, c/o Pioneer Corporation R & D, Tsurugashima-shi, Saitama, 350-2288 (JP); Satoh, Hideo, c/o Pioneer Corporation R & D, Tsurugashima-shi, Saitama, 350-2288 (JP); Ogasawara, Kiyohide, c/o Pioneer Corporation R & D, Tsurugashima-shi, Saitama, 350-2288 (JP)
(74) Representative: Betten & Resch

(56) References cited:
- EP-A- 0 874 384
- EP-A- 0 913 849
- US-A- 5 430 300
- PATENT ABSTRACTS OF JAPAN vol. 1999, no. 14, 22 December 1999 (1999-12-22) & JP 11 265653 A (ULVAC CORP), 28 September 1999 (1999-09-28)

## Description

### BACKGROUND OF THE INVENTION

### 1. Field of the invention

The present invention relates to an electron emission device and particularly to a porous semiconductor electron emission device.

### 2. Description of the related art

In field electron emission display apparatuses, an Field Emission Display (FED) is known as a planar emission display device equipped with an array of cold-cathode electron emission source which does not require cathode heating. There also exists attentions to planar electron sources such as an electron emission device with a metal-insulator-metal (MIM) structure and to an electron emission device using a porous semiconductor such as silicon (Si).

The porous semiconductor electron emission device comprises a porous semiconductor layer and a thin-film metal electrode both are formed in turn on a silicon layer provided with an ohmic electrode at the back side. If the porous semiconductor electron emission device is used for a display device, a part of electrons are passed through the thin-film metal electrode by a voltage applied across the thin-film metal electrode and the silicon layer so that the electrons travelling a vacuum space impinge on a facing electrode covered with a fluorescent material to emit light. Such an electron emission device is known from EP-A-0 913 149.

### SUMMARY OF THE INVENTION

Even the electron emission device with the MIM structure or porous semiconductor electron emission device does not yet provide a sufficient amount of emitted electrons.

Thus, the present invention has been made to solve such a problem in view of the forgoing status. Therefore an object of the present invention to provide an electron emission device with a high electron emission efficiency.

An electron emission device according to the present invention comprises:
a semiconductor layer for supplying electrons;
a porous semiconductor layer formed on the semiconductor layer; and
a thin-film metal electrode which is formed on the porous semiconductor layer and faces a vacuum space; and further comprising a carbon region made of carbon or a carbon compound provided on top or under, or inside of said thin-film metal electrode, whereby the electron emission device emits electrons when an electric field is applied between the semiconductor layer and the thin-film metal electrode.

According to the electron emission device of the invention with the above structure, said thin-film metal electrode and said carbon region are deposited through a physical deposition method or a chemical deposition method.

In an embodiment of the electron emission device of the invention, said carbon region is a thin film deposited on said thin-film metal electrode.

In another embodiment of the electron emission device of the invention, said carbon region is distributed within said thin-film metal electrode.

In further another embodiment of the electron emission device of the invention, said carbon region is a thin film deposited under said thin-film metal electrode.

In still further another embodiment of the electron emission device of the invention, the porous semiconductor layer is formed by an anodization processing to the surface of the semiconductor layer to be made as a porous portion.

In an embodiment of the electron emission device of the invention, the porous semiconductor layer has at least two or more of porosity-changed layers which have porosities which are different from each other in the thickness direction.

In another embodiment of the electron emission device of the invention, the porosity-changed layer with a high porosity and another porosity-changed layer with a low porosity are layered by turns in the thickness direction of the porous semiconductor layer.

In further another embodiment of the electron emission device of the invention, the semiconductor layer is anodic-oxidized from the surface thereof in such a manner that a first processing time duration in which a low current density for the anodization processing is applied to the surface and a second processing time duration in which a high current density for the anodization processing is applied to the surface are repeated by turns, so that the porosity-changed layer with a high porosity and another porosity-changed layer with a low porosity are layered by turns in the thickness direction of the porous semiconductor layer.

In still further another embodiment of the electron emission device of the invention, the porosity-changed layers have incline porosity ascended gradually in the thickness direction. Alternatively, the porosity-changed layers have incline porosity descended gradually in the thickness direction.

In an embodiment of the electron emission device of the invention, the semiconductor layer is anodic-oxidized from the surface thereof during a processing time in which a current density for the anodization processing is changed so that the porosity-changed layers have incline porosities in the thickness direction.

According to the electron emission device of the present invention with the above structure, a high electron emission efficiency is obtained. Therefore, this electron emission device, when in use in a display device, can provide a high luminance, can suppress the consumption of the driving electric current and the generation of heat from the device, and can reduce a load on the driving circuit for the display device.

This electron emission device according to the present invention is a plane or dot electron emission diode which can serve as a light-emitting diode or a laser diode which emits electromagnetic waves of infrared rays, visible light or ultraviolet rays.

According to the electron emission device of the invention, since the porous surface of the porous semiconductor layer becomes a smoothed flat and the contact area with the surface of the thin-film metal electrode increases, the electron emission is stabilized. In addition, since a high density layer with a low porosity exists in the inside of the porous semiconductor layer, the rate of thermal conductivity increases in the layer and the thermal destruction of device comes to seldom occur due to a heat-dissipation effect.

### BRIEF DESCRIPTION OF THE DRAWINGS

Fig. 1 is a schematic cross-sectional view of an electron emission device of an embodiment according to the invention;
Figs. 2 to 4 are schematic cross-sectional views each showing an electron emission device of another embodiment according to the invention;
Figs. 5A, 5B, 5C and 5D are graphs each illustrating a relationship between the current density and the processing period during the anodic oxidation treatment for fabricating an electron emission device of an embodiment according to the invention; and
Fig. 6 is a graph illustrating relationships of both the diode current Ips and the emission current Iem with respect to the driving voltage Vps applied for driving the electron emission device together with that of a comparative electron emission device.

### DETAILED DESCRIPTION OF THE PREFERRED EMBODIMENTS

Preferred embodiments according to the present invention will be described in more detail with reference to the accompanying drawings.

### (Electron emission device)

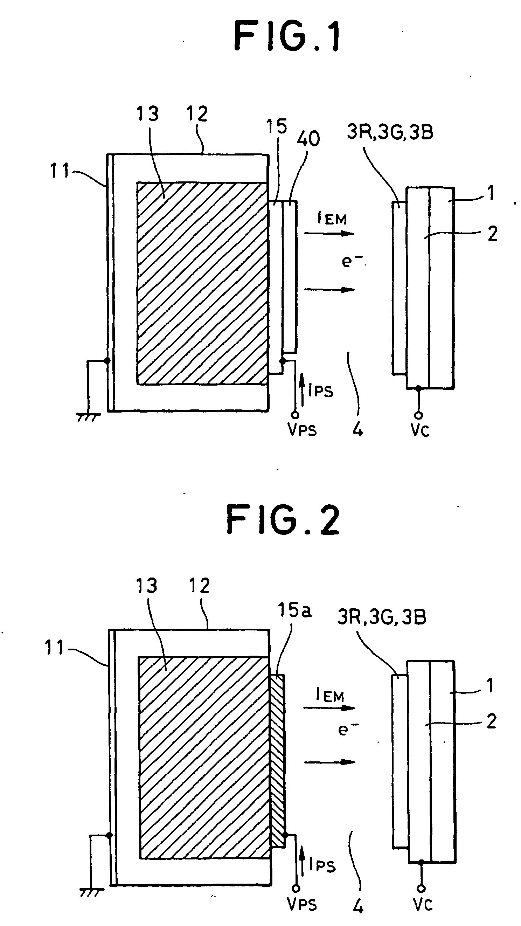

As shown in Fig. 1, the electron emission device using a porous semiconductor layer embodying the present invention comprises a porous semiconductor layer 13, a thin-film metal electrode 15 and a carbon region or thin film made of carbon or a carbon compound 40 which are formed in turn on a silicon layer 12 provided with an ohmic electrode 11 at the back side. The porous semiconductor layer 13 is formed by an anodic oxidation of the Si semiconductor layer 12 after the formation thereof. As for the whole, the porous semiconductor layer 13 has a thickness ranging of from 1 to 50 micrometers. As for the material of the carbon region 40, forms of carbon such as amorphous carbon, graphite, carbyne, fullerene (C₂ₙ), diamond-like carbon, carbon nano-tube, and diamond etc., or carbon compounds such as ZrC, SiC, WC, and MoC etc. are effective.

As for the film formation method in manufacturing such electron emission devices, a physical or chemical method is used. The physical methods are known as physical vapor deposition (PVD) and include a vacuum deposition method, molecular beam epitaxy method, sputtering method, ionized vapor deposition method and laser abrasion method. The chemical methods are known as chemical vapor deposition (CVD) and include thermal CVD, plasma CVD and MOCVD (metal-organic chemical vapor deposition) etc. Among these methods, the sputtering method is especially effective.

Furthermore, as shown in Fig. 2, the carbon regions may be provided as a thin-film metal electrode 15a by having them distributed within the thin-film metal electrode. In this case, after the formation process for the porous semiconductor layer 13 through the anodic oxidation of the semiconductor layer 12, the formation process of the carbon region is performed as the thin-film metal electrode formation process in which the thin-film metal electrode 15a containing the carbon region is formed over the porous semiconductor layer 13, with carbon or a carbon compound being mixed with the metal by using i.e. a mixed target or by sputtering within a carbon or carbon compound gas atmosphere.

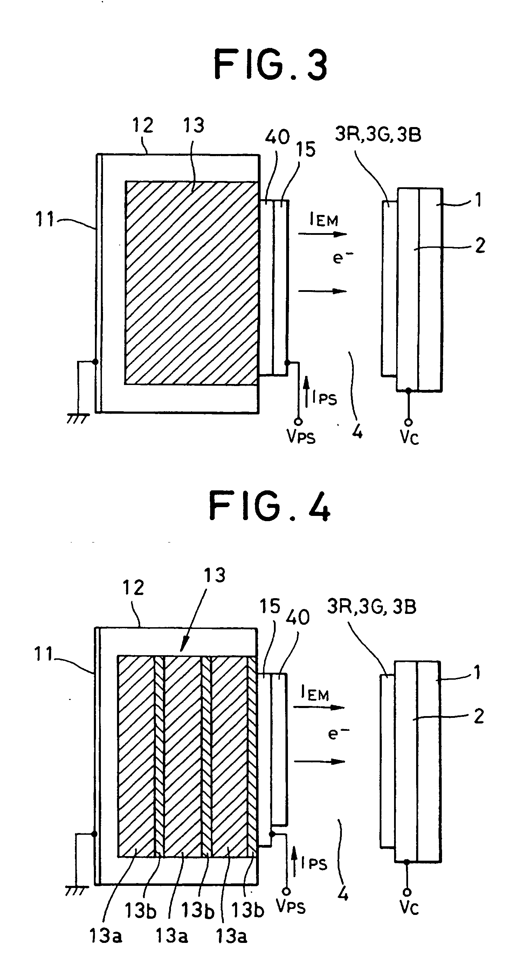

Alternatively, the carbon region 40 may be formed as a thin film deposited under the thin-film metal electrode 15 as shown in Fig. 3. In this case, the forming process of the carbon region is performed after the formation process of the porous semiconductor layer 13, followed by the formation process of the thin-film metal electrode 15 over the carbon region 40. In this way, the formation process of the carbon region is performed immediately before the formation process of the thin-film metal electrode 15. The structure shown in Fig. 3 is obtained in which the carbon region 40 is formed between the thin-film metal electrode 15 and the porous semiconductor layer 13.

The porous semiconductor electron emission device can be regarded as a diode of which the thin-film metal electrode 15 at its surface is connected to a positive potential Vps and the back, i.e., ohmic electrode 11 is connected to a ground potential. When the voltage Vps is applied between the ohmic electrode 11 and the thin-film metal electrode 15 to supply electrons into the semiconductor layer 12 of semiconductor Si, a diode current Ips flows. Since the porous semiconductor layer 13 has a high resistance, most of the applied electric field is applied to the porous semiconductor layer 13. The electrons travel inside the porous semiconductor layer 13 toward the thin-film metal electrode 15. Some of the electrons that reach near the thin-film metal electrode 15 pass through the thin-film metal electrode 15, due to the strong electric field, to be discharged out into a vacuum space 4 if the vacuum space exists in the outside.

In a case where the porous semiconductor electron emission device is used as a light-emitting device, the device substrate provided with the porous semiconductor electron emission devices is used as the first substrate at the backside, and a transparent second substrate 1 such as one made of glass is retained as the front side substrate via a vacuum space 4 as shown in Fig. 1. On the internal surface of the second substrate 1, a transparent collector electrode 2 made of indium-tin oxide (what we call ITO), tin oxide (SnO) or zinc oxide (ZnO) etc. and a phosphor layer of R, G or B are formed in turn. To fabricate a color display device using the porous semiconductor electron emission devices, the collector electrodes 2 capturing emitted electrons are grouped per three for R, G and B color signals corresponding to Red, Green and Blue emitting portions. Thus, fluorescent material layers 3R, 3G and 3B corresponding to R, G and B emissions are formed on the corresponding collector electrodes 2. The electrons e (emission current Iem) discharged from the carbon region 40 are accelerated by a high voltage Vc which is applied to the opposing collector electrode (transparent electrode) 2, and are collected at the electrode 2. The fluorescent material layers coated on the collector electrode 2 emit corresponding visible luminous energy.

Fig. 4 shows another embodiment of the present invention which is the same as the above embodiment comprising the ohmic electrode 11, the semiconductor layer 12 and the thin-film metal electrode 15, except that the porous semiconductor layer 13 consists of at least two or more of porosity-changed layers 13a and 13b which have porosities different from each other respectively in the thickness direction.

As shown in Fig. 4, the porous semiconductor layer 13 is formed so that a porosity-changed layer with a high porosity 13a and a porosity-changed layer with a low porosity 13b may be alternately layered by in the thickness direction. The porosity-changed layer with a high porosity 13a thus has an electrical resistance lower than that of the porosity-changed layer with a low porosity 13b.

In addition, the high porosity-changed layer 13a and/or low porosity-changed layer 13b may be formed in such a manner that each may have an incline porosity gradually ascended in the thickness direction. Alternatively the incline porosity may be gradually descended in the thickness direction.

Thus, the change in porosity is given into the porous semiconductor layer 13. The porosity-changed layer with a low porosity 13b having a high resistance should be flatly formed on the outer-most surface. The low porosity-changed layer 13b prevents a superfluous current of the diode current Ips, and improves the contact with the thin-film metal electrode 15 formed thereon. Moreover, since the porosity-changed layer with a low porosity 13b is layered by turns, the thermal dissipation of the device will be promoted.

To repeatedly form the lamination combination of the high and low porosity-changed layers 13a and 13b will control the superfluous current of the diode current Ips, and will raise the heat-dissipation effect further, although the above-mentioned effects are obtained by using at least one set of lamination of the high and low porosity-changed layers 13a and 13b.

The electron emission device emits electrons although the thin-film electrode of metal such as Pt is simply prepared on the low porosity-changed layer 13b. Alternatively, after anodization for making pores on the semiconductor layer, oxidization or nitriding may be performed on the resulted porous semiconductor layer under the following conditions and, after that, the thin-film electrode of metal such as Pt is prepared, so that an emission stability and durability of the device are improved more.

The porous semiconductor layer may be oxidized under the oxidization conditions of a temperature ranging from 700 to 1200 degrees Centigrade and a time period of form 1 to 120 minutes in oxygen gas, alternatively under the oxidization conditions of a temperature ranging from 200 to 900 degrees Centigrade and a time period of form 1 to 120 minutes in oxygen plasma. The porous semiconductor layer may be nitrided under the nitriding conditions of a temperature ranging from 700 to 1200 degrees Centigrade and a time period of form 1 to 120 minutes in nitrogen gas, alternatively under the nitriding conditions of a temperature ranging from 200 to 900 degrees Centigrade and a time period of form 1 to 120 minutes in nitrogen plasma.

In addition, a Si wafer of a single-crystalline, amorphous, poly-crystalline, n-type or p-type may be used for a device-substrate in which the porous Si layer is formed through the anodization. Alternatively, the thin Si layer may be deposited on the ohmic electrodes previously formed on a substrate. This case is convenient to a display device comprising a plurality of electron emission devices.

Although sputtering is particularly effective in forming those layers and the substrate, vacuum deposition method, CVD (Chemical Vapor Deposition), laser ablation method, MBE (Molecular Beam Epitaxy) and ion beam sputtering are also effective.

The material of the semiconductor layer 12 preferably used is silicon (Si), but not restricted in the present invention. In addition to the semiconductor layer of silicon, there may be used for the semiconductor layer 12 semiconductor materials capable of being treated by means of an anodic treatment method, for example, a single substance or compound semiconductor of Group IV, Group III-V or Group II-VI such as germanium (Ge), silicon carbide (SiC), gallium arsenide (GaAs), phosphoric indium (InP), cadmium selenide (CdSe). When employing the crystalline for the Si layer 12, the crystal substrate having its surface (100) direction orientating perpendicular to its major surface is preferably used, because the electron emission efficiency η of the porous Si layer is better. It is estimated that such a (100) Si layer provides the Si crystalline direction and minute pore channels with a nano-order diameter which orientate perpendicular to its major surface. In addition, the employment of the porous Si layer made from the amorphous Si layer provides amorphous residual Si skeletons and minute channels.

The porous semiconductor layer 13 is formed in the semiconductor wafer 12 through the anodic treatment. For example, a semiconductor wafer 12 of an n-type Si is preformed by an anodic treatment, in which an insulative layer with a rectangle opening is previously formed on the semiconductor wafer. The semiconductor wafer is then dipped into a hydrogen fluoride (HF) solution bath. The surface of the semiconductor layer is partially exposed in the HF solution through the opening of the insulative layer. The exposed semiconductor layer as an anode and the cathode of Pt are disposed facing to each other in the HF solution. The anode and cathode are connected to a DC power supply, so that a DC current is applied across these electrodes with a low current density to anodize the exposed semiconductor layer. As a result, a p-type porous Si layer is formed in the Si substrate. In this embodiment, the formation of the porous structure requires the consumption of positive holes and thus the light-irradiation should be preformed during the anodization to supply the positive hole carriers to the exposed semiconductor layer. Alternatively, the porous Si layer may be formed on a p-type Si semiconductor layer. In this case, the porous Si layer may be formed even if it is in a dark condition.

The porous Si layer is consisted of plural minute channels or open spaces and the residual Si . When the pore channel's diameter is in a range from approximately one to several hundreds nano-meters and the dimension of each residual Si skeleton is in a range from the number of tens to hundreds of Si atoms, it is expected that an electron emission phenomenon occurs due to the quantum size effect. These values may be controlled by the settings of the conditions of the HF density, the current density, the duration of anodization treatment and the light-irradiation time period during the anodic treatment.

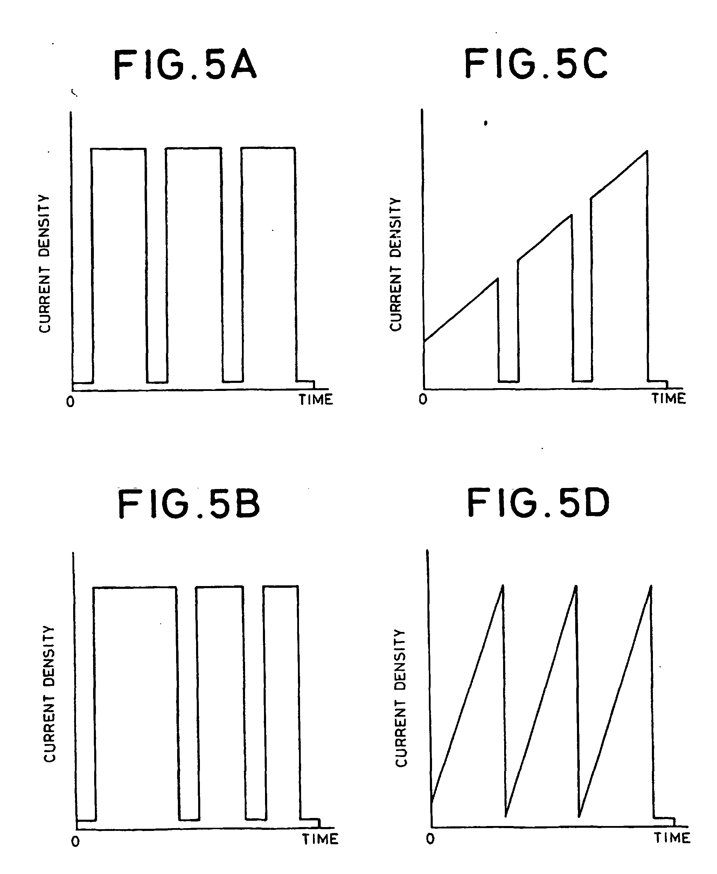

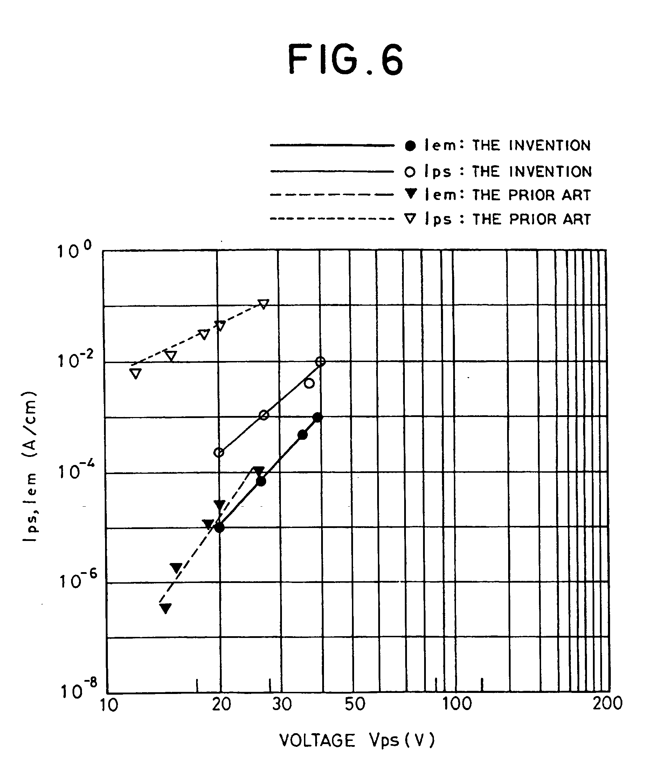

By controlling the current density and the processing period in the anodizing treatment of the semiconductor layer, the porosity is changed at 10 to 80% in the thickness direction of the porous semiconductor layer 13 having the porosity-changed layers 13a and 13b. This change of porosity is preformed in each porosity-changed layer. For example, the porosity-changed layers 13a and 13b formed by turns in such a manner that anodizations both of the short processing period with a low current density and of the long processing period with a high current density are repeated by turns, as shown in Figs. 6A and 6B, so that the internal diameter of the minute pore channel adjacent to the surface of the porous Si layer becomes comparatively small (i.e., the porosity-changed layer 13b), but such internal diameter of the pore channel increases as its depth becomes deeper (i.e., the porosity-changed layer 13a). In this case, the long processing periods with a high current density are equal to each other for forming the porosity-changed layers with a high porosity 13a intermittently, as shown in Fig. 5A. The long processing periods with a high current density may be gradually made short for forming the high porosity-changed layers 13a becoming thin gradually, as shown in Fig. 5B.

Moreover, at least two or more of the porosity-changed layers each having a porosity different from the contiguities in the thickness direction can also be formed in the porous semiconductor layer by means of anodizations under the conditions of the current densities and the processing periods as shown in Figs. 6C and 6D. By controlling the current densities and processing periods, the specific resistance becomes small so that it is close to the Si layer 12 in each layer. There are a gradual slope of porosity proportional to the resistivity in each porosity-changed layer 13a formed by the anodization as shown in Fig. 5C or 5D. For porosity slope of the thickness direction in the porous silicon layer, the current density is gradually changed during the anodization. The porous Si layer 13 may have a high resistivity at a portion adjacent to its surface and a low resistivity at a portion adjacent to its interface between the porous Si layer 13 and the Si substrate 12. This continuous incline of resistivity in the porous Si layer 13 is preferable for the injection of electrons from the substrate.

Although metals such as Pt, Au, W, Ru and Ir are effective as the material for the thin-film metal electrode 15 on the electron emission side, Al, Sc, Ti, V, Cr, Mn, Fe, Co, Ni, Cu, Zn, Ga, Y, Zr, Nb, Mo, Tc, Rh, Pd, Ag, Cd, Ln, Sn, Ta, Re, Os, Tl, Pb, La, Ce, Pr, Nd, Pm, Sm, Eu, Gd, Tb, Dy, Ho, Er, Tm, Yb, Lu and an alloy of individuals thereof can be used as well. From the principle of electron emission, it is better that the material for the thin-film metal electrode 15 has a lower work function φ and is thinner. To increase the electron emission efficiency, the material for the thin-film metal electrode 15 should be a metal of the group I or group II in the periodic table; for example, Cs, Rb, Li, Sr, Mg, Ba, Ca and the like are effective and alloys of those elements may be used as well. To make the thin-film metal electrode 15 very thin, the material for the thin-film metal electrode 15 should be a chemically stable metal with a high conductivity; for example, single substances of Au, Pt, Lu, Ag and Cu or alloys thereof are desirable. It is effective to coat or dope a metal with a low work function as described above on or in those metals. Utilizable efficiency is obtained by using an Au or Pt thin-film electrode having a thickness of from 1 to 50 nm. When considering the stability as an electron emission device, a thickness of from 2 to 20 nm is the most suitable for the Au or Pt thin-film electrode.

The material for the ohmic electrodes 11 is Au, Pt, Al, W or the like which is generally used for the wires of an IC, and has a uniform thickness for supplying substantially the same current to the individual devices.

The material for another device-substrate (not shown) on which the semiconductor Si layer 12 is deposited as a thin-film may be ceramics such as Al₂O₃, Si₃N₄ or BN instead of glass.

### (Primary example)

Concretely, the electron emission devices were produced from Si wafers of 14mm x 14mm, and their characteristic were investigated.

While the current density and the processing period of anodization were changed in the anodization method using the Si wafer, the processing of the short time for which current density was reduced was performed intermittently. As a result, the thin porosity-changed layers were formed in the porous semiconductor layer of the Si wafer, in each of which the average pore diameter was 1/20 and the average number of pores was 400 times per centimeter square in comparison with that of the conventional device. The anodization conditions were as follows:

### (Anodization conditions)

Ingredients of the electrolytic solution (temperature):
   HF : Ethanol = 1 : 1 (at 0 degree Centigrade)
Current density and processing period:
   A set of (2.5mA/cm² for 2 seconds and 50mA/cm² for 10 seconds) times 3 equals a total of 36 seconds.
Thickness of the porous semiconductor layer:
   A set of (porosity-changed layers of 0.016µm and 1.67 µm thick) times 3 equals a total of 5.058µm thick.

### (Comparative example)

The same electron emission device was produced as comparative examples in such a manner as the above-mentioned case except having a conventional porous silicon layer with a uniform porosity. At this case, it carried out under the following anodization conditions.

### (Anodization conditions)

Ingredients of the electrolytic solution (temperature):
   HF : Ethanol = 1 : 1 (at 0 degree Centigrade)
Current density and processing period:
   It is 50mA/cm² constant for a whole period. processing period: 30 seconds
Thickness of the porous semiconductor layer: 5µm

An ohmic electrode was formed at the back side of each Si wafer after anodized.

Finally, a 6 mm diameter thin-film metal electrode of Pt was formed 6 nm thick on the surface of the amorphous SiO₂ layer of each substrate by sputtering, thus providing a plurality of device-substrates.

Meanwhile, transparent substrates were prepared, each of which has a collector electrode of indium tin oxide (ITO) formed inside a transparent glass substrate and has a fluorescent layer of a fluorescent substance corresponding to R, G or B color emission formed on the collector electrode by the normal scheme.

Electron emission devices were assembled in each of which the device-substrate and the transparent substrate are supported apart from one another by 10 mm in parallel by a spacer in such a way that the thin-film metal electrode 15 faced the collector electrode 2, with the clearance therebetween made to a vacuum of 10-5 Pa.

### (Results)

Then, the diode current Ips and the emission current Iem corresponding to the thickness of the SiO₂ film of each of the acquired plural devices were measured.

This result is shown in Fig. 6. As for the device of the invention, as seen from the figure, only the diode current Ips was restricted, without carrying out an emission current Iem fall, and electron emission efficiency η improved from 10⁻³ to 10⁻¹ no less than 2 figures in comparison with that of the conventional device.

Moreover, fluctuations of temperature of the electron emission devices both of the embodiment and the comparative example were measured when the same voltage Vps was applied to each device. The electron emission device of the invention generally exhibited a uniform declining of temperature upon application of the constant voltage Vps, in comparison with that of the comparative example.

When a voltage of approximately 4 kV applied across the fluorescent-substance coated collector electrode and the thin-film metal electrode, a uniform fluorescent pattern corresponding to the shape of the thin-film metal electrode was observed in the devices. This shows that the uniform electron emission is caused by the porous semiconductor layer having at least two or more of porosity-changed layers which have porosities which are different from each other in the thickness direction and the emission exhibits a high linearity, and that those devices can serve as an electron emission diode, or a light-emitting diode or laser diode which emits electromagnetic waves of infrared rays, visible light or ultraviolet rays.

As mentioned above, according to the present invention, the electron emission device comprising the carbon region made of carbon or a carbon compound provided on top or under, or inside of the thin-film metal electrode, prevents a superfluous flow of diode current Ips during the operation of device to provide a high electron emission efficiency η (η = emission current Iem/diode current Ips). In addition, the present invention eliminates the problem of the contact between the porous semiconductor layer and the thin-film metal electrode formed thereon to make the electron emission stable. Such a contact problem is caused by a phenomenon that the rough surface of the porous semiconductor layer after the anodic oxidation prevents from contacting closely with the thin-film metal electrode.

## Claims

1. An electron emission device comprising:
a semiconductor layer (12) for supplying electrons;
a porous semiconductor layer (13) formed on the semiconductor layer; and
a thin-film metal electrode (15) which is formed on the porous semiconductor layer and faces a vacuum space, whereby the electron emission device emits electrons when an electric field is applied between the semiconductor layer and the thin-film metal electrode, **characterised in that** the electron emission device further comprises a carbon region (40) made of carbon or a carbon compound provided on top or under, or inside of said thin-film metal electrode.

2. An electron emission device according to claim 1, wherein said thin-film metal electrode and said carbon region are deposited through a physical deposition method or a chemical deposition method.

3. An electron emission device according to claim 1, wherein said carbon region is a thin film deposited on said thin-film metal electrode.

4. An electron emission device according to claim 1, wherein said carbon region is distributed within said thin-film metal electrode (15a).

5. An electron emission device according to claim 1, wherein said carbon region is a thin film deposited under said thin-film metal electrode.

6. An electron emission device according to claim 1, wherein the porous semiconductor layer is formed by an anodization processing to the surface of the semiconductor layer to be made as a porous portion.

7. An electron emission device according to claim 6, wherein the porous semiconductor layer has at least two or more of porosity-changed layers (13a,13b) which have porosities which are different from each other in the thickness direction.

8. An electron emission device according to claim 7, wherein the porosity-changed layer with a high porosity (13a) and another porosity-changed layer with a low porosity (13b) are layered by turns in the thickness direction of the porous semiconductor layer.

9. An electron emission device according to claim 8, wherein the semiconductor layer is anodic-oxidized from the surface thereof in such a manner that a first processing time duration in which a low current density for the anodization processing is applied to the surface and a second processing time duration in which a high current density for the anodization processing is applied to the surface are repeated by turns, so that the porosity-changed layer with a high porosity and another porosity-changed layer with a low porosity are layered by turns in the thickness direction of the porous semiconductor layer.

10. An electron emission device according to claim 7, wherein the porosity-changed layers have incline porosities ascended or descended gradually in the thickness direction.

11. An electron emission device according to claim 10, wherein the semiconductor layer is anodic-oxidized from the surface thereof during a processing time in which a current density for the anodization processing is changed so that the porosity-changed layers have incline porosities in the thickness direction.

## Patentansprüche

1. Elektronenemissionsvorrichtung mit
einer Halbleiterschicht (12) zur Zuführung von Elektronen,
einer auf der Halbleiterschicht ausgebildeten porösen Halbleiterschicht (13), und
einer Dünnfilm-Metallelektrode (15), die auf der porösen Halbleiterschicht ausgebildet ist und einem luftleeren Raum zugewandt ist, wodurch die Elektronenemissionsvorrichtung Elektronen emittiert, wenn ein elektrisches Feld zwischen der Halbleiterschicht und der Dünnfilm-Metallelektrode angelegt wird, **dadurch gekennzeichnet, dass** die Elektronenemissionsvorrichtung weiterhin einen aus Kohlenstoff oder einer Kohlenstoffverbindung bestehenden Kohlenstoffbereich (40) aufweist, der oben auf oder unter oder innerhalb der Dünnfilm-Metallelektrode vorgesehen ist.

2. Elektronenemissionsvorrichtung nach Anspruch 1, bei der die Dünnfilm-Metallelektrode und der Kohlenstoffbereich durch ein physikalisches Abscheidungsverfahren oder ein chemisches Abscheidungsverfahren abgeschieden sind.

3. Elektronenemissionsvorrichtung nach Anspruch 1, bei der der Kohlenstoffbereich ein auf der Dünnfilm-Metallelektrode abgeschiedener Dünnfilm ist.

4. Elektronenemissionsvorrichtung nach Anspruch 1, bei der der Kohlenstoffbereich in der Dünnfilm-Metallelektrode (15a) verteilt ist.

5. Elektronenemissionsvorrichtung nach Anspruch 1, bei der der Kohlenstoffbereich ein unter der Dünnfilm-Metallelektrode abgeschiedener Dünnfilm ist.

6. Elektronenemissionsvorrichtung nach Anspruch 1, bei der die poröse Halbleiterschicht durch eine anodische Oxidationsbearbeitung an der Oberfläche der Halbleiterschicht ausgebildet ist und so als ein poröser Teil hergestellt ist.

7. Elektronenemissionsvorrichtung nach Anspruch 6, bei der die poröse Halbleiterschicht mindestens zwei oder mehr porositätsveränderte Schichten (13a, 13b) aufweist, die Porositäten haben, die in der Dickenrichtung voneinander verschieden sind.

8. Elektronenemissionsvorrichtung nach Anspruch 7, bei der die porositätsveränderte Schicht mit hoher Porosität (13a) und die andere porositätsveränderte Schicht mit niedriger Porosität (13b) in der Dickenrichtung der porösen Halbleiterschicht abwechselnd geschichtet sind.

9. Elektronenemissionsvorrichtung nach Anspruch 8, bei der die Halbleiterschicht aus deren Oberfläche anodenoxidiert wird, derart, dass eine erste Bearbeitungszeitdauer, in der eine niedrige Stromdichte für die anodische Oxidationsbearbeitung an die Oberfläche angelegt wird, und eine zweite Bearbeitungszeitdauer, in der eine hohe Stromdichte für die anodische Oxidationsbearbeitung an die Oberfläche angelegt wird, abwechselnd wiederholt werden, so dass die porositätsveränderte Schicht mit hoher Porosität und die andere porositätsveränderte Schicht mit niedriger Porosität in der Dickenrichtung der porösen Halbleiterschicht abwechselnd geschichtet sind.

10. Elektronenemissionsvorrichtung nach Anspruch 7, bei der die porositätsveränderten Schichten Gefälleporositäten haben, die in der Dickenrichtung graduell aufsteigend oder absteigend sind.

11. Elektronenemissionsvorrichtung nach Anspruch 10, bei der die Halbleiterschicht während einer Bearbeitungszeit, in der eine Stromdichte für die anodische Oxidationsbearbeitung verändert wird, aus deren Oberfläche anodenoxidiert wird, so dass die porositätsveränderten Schichten Gefälleporositäten in der Dickenrichtung haben.

## Revendications

1. Dispositif d'émission d'électrons comprenant :
une couche semi-conductrice (12) pour fournir des électrons ;
une couche semi-conductrice poreuse (13) formée sur la couche semi-conductrice ; et
une électrode métallique à couche mince (15) qui est formée sur la couche semi-conductrice poreuse et qui est située en face d'un vide spatial, par laquelle le dispositif d'émission d'électrons émet des électrons quand un champ électrique est appliqué entre la couche semi-conductrice et l'électrode métallique à couche mince, **caractérisé en ce que** le dispositif d'émission d'électrons comprend en outre une région de carbone (40) constituée de carbone ou d'un composé de carbone prévu au-dessus ou au-dessous, ou à l'intérieur de ladite électrode métallique à couche mince.

2. Dispositif d'émission d'électrons selon la revendication 1, dans lequel ladite électrode métallique à couche mince et ladite région de carbone sont déposées au moyen d'un procédé de dépôt physique ou d'un procédé de dépôt chimique.

3. Dispositif d'émission d'électrons selon la revendication 1, dans lequel ladite région de carbone est une couche mince déposée sur ladite électrode métallique à couche mince.

4. Dispositif d'émission d'électrons selon la revendication 1, dans lequel ladite région de carbone est répartie au sein de ladite électrode métallique à couche mince (15 a).

5. Dispositif d'émission d'électrons selon la revendication 1, dans lequel ladite région de carbone est une couche mince déposée sous ladite électrode métallique à couche mince.

6. Dispositif d'émission d'électrons selon la revendication 1, dans lequel la couche semi-conductricè poreuse est formée par un traitement d'anodisation sur la surface de la couche semi-conductrice à fabriquer sous la forme d'une portion poreuse.

7. Dispositif d'émission d'électrons selon la revendication 6, dans lequel la couche semi-conductrice poreuse a au moins deux des couches à porosité modifiée ou plus (13a, 13b) qui ont des porosités différentes les unes des autres dans le sens de l'épaisseur.

8. Dispositif d'émission d'électrons selon la revendication 7, dans lequel la couche à porosité modifiée avec une porosité élevée (13a) et une autre couche à porosité modifiée avec une faible porosité (13b) sont superposées tour à tour dans le sens de l'épaisseur de la couche semi-conductrice poreuse.

9. Dispositif d'émission d'électrons selon la revendication 8, dans lequel la couche semi-conductrice est anodisée depuis la surface de celle-ci de telle sorte qu'une durée d'un premier traitement au cours de laquelle une densité à faible courant pour le traitement de l'anodisation est appliquée sur la surface et qu'une durée d'un deuxième traitement au cours de laquelle une densité de courant élevée pour le traitement d'anodisation est appliquée sur la surface, sont répétées tour à tour, de sorte que la couche à porosité modifiée avec une porosité élevée et une autre couche à porosité modifiée avec une porosité faible, sont superposées tour à tour dans le sens de l'épaisseur de la couche semi-conductrice poreuse.

10. Dispositif d'émission d'électrons selon la revendication 7, dans lequel les couches à porosité modifiée possèdent des porosités inclinées qui montent ou qui descendent progressivement dans le sens de l'épaisseur.

11. Dispositif d'émission d'électrons selon la revendication 10, dans lequel la couche semi-conductrice est anodisée depuis la surface de celle-ci pendant une durée de traitement au cours de laquelle une densité de courant pour le traitement d'anodisation est modifiée de façon à ce que les couches à porosité modifiée aient des porosités inclinées dans le sens de l'épaisseur.
